# FASCICULE DE BREVET EUROPEEN

(11) **EP 2 413 567 B1**
(45) Date de publication et mention de la délivrance du brevet: **21.11.2018**
(21) Numéro de dépôt: 11305989.3
(22) Date de dépôt: 28.07.2011
(51) Int. Cl.: H04L 29/06, H04L 29/08

(54) **Téléphone mobile comprenant un serveur de diffusion en flux avec des moyens d'activation du téléchargement d'un fichier en vue de sa diffusion**
Mobiltelefon, das einen Flussübertragungsserver mit Mitteln zur Aktivierung des Herunterladens einer Datei im Hinblick auf dessen Übertragung umfasst
Mobile telephone including a streaming server with a means for enabling the download of a file for the purpose of being streamed

(30) Priorité: 29.07.2010 FR 1056257
(43) Date de publication de la demande: 01.02.2012
(73) Titulaire: Myriad Group AG, 8001 Zürich (CH)
(72) Inventeur: Panei, Fabien, 38530 CHAPAREILLAN (FR)
(74) Mandataire: D Young & Co LLP

(56) Documents cités:
- EP-A2- 1 906 666
- WO-A2-2008/143493
- JP-A- 2009 258 916
- Jon Healey: "CES: Beamed from the phone to the TV screen", LA Times , 9 janvier 2010 (2010-01-09), pages 1-2, XP002624399, Extrait de l'Internet: URL:http://latimesblogs.latimes.com/techno logy/2010/01/ces-beamed-from-the-phone-to- the-tv-screen.html [extrait le 2011-02-22]
- Alexander Grundner: "Smartphone Version of Twonky Media's DLNA / UPNP Server now available", e Home Upgrade , 7 janvier 2010 (2010-01-07), page 2PP, XP002624397, Extrait de l'Internet: URL:http://www.ehomeupgrade.com/2010/01/07 /smartphone-version-of-twonkymedias-dlna-u pnp-server-now-available/ [extrait le 2011-02-22]
- Anonymous: "Twonky Mobile Apps", Twonky , 2010, page 2PP, XP002627142, Extrait de l'Internet: URL:http://www.twonky.com/products/twonkym obile/default.aspx [extrait le 2011-02-22]
- Anonymous: "Twonkymedia goes mobile with android launch at ces", Twonky , 7 janvier 2010 (2010-01-07), page 2PP, XP002627143, Extrait de l'Internet: URL:http://www.twonky.com/upfiles/CES%2020 10%20TwonkyServer%20Mobile%20FINAL.pdf [extrait le 2011-02-22]
- Taylor Wimberly: "TwonkyServer Mobile: media server in your pocket", Twonky , 8 janvier 2010 (2010-01-08), pages 1-3, XP002624398, Extrait de l'Internet: URL:http://androidandme.com/2010/01/news/t wonkyserver-mobile-media-server-in-your-po cket/ [extrait le 2011-02-22]
- Anonymous: "Samsung Galaxy S GT-19000 quick start guide", Samsung , 1 juillet 2010 (2010-07-01), pages 1-58, XP002624407, Extrait de l'Internet: URL:http://downloadcenter.samsung.com/cont ent/EM/201007/20100716085606250/GT-I9000_Q SG_EU_Eng_Rev.1.1_100715.pdf [extrait le 2011-02-22]

## Description

La présente invention concerne un téléphone mobile du type comprenant :
- une première mémoire tampon,
- des moyens de téléchargement d'un fichier de données depuis un serveur web dans la première mémoire tampon, le fichier étant accessible à une adresse web sur le serveur web, les moyens de téléchargement étant reliés à la première mémoire tampon,
- un serveur de diffusion en flux de données à destination d'un équipement client distant suivant un protocole réseau prédéterminé, le serveur de diffusion en flux étant relié à la première mémoire tampon, le serveur de diffusion en flux étant propre à être relié à l'équipement client distant via une liaison de données et à recevoir, de la part de l'équipement client distant, une requête de diffusion de données.

L'invention concerne également un réseau local de transmission de données comportant un tel téléphone mobile et un équipement client distant relié au téléphone mobile via une liaison de données, le téléphone mobile et l'équipement client distant étant propres à communiquer suivant un protocole réseau prédéterminé.

On connaît un téléphone mobile du type précité. Le téléphone mobile comporte un serveur de diffusion en flux généralement compatible avec le protocole réseau UPnP (de l'anglais Universal Plug and Play), ou encore respectivement avec le standard d'interopérabilité DLNA (de l'anglais Digital Living Network Alliance), le serveur étant alors appelé serveur UPnP, respectivement serveur DLNA. Un tel serveur permet de diffuser en flux un média enregistré dans une mémoire interne du téléphone à destination d'un équipement client distant également compatible avec le protocole réseau UPnP, ou encore avec le standard DLNA. Le média diffusé en flux comporte des données audio et/ou vidéo. Le téléphone mobile comprend également un navigateur web comportant des moyens de téléchargement d'un fichier depuis un serveur web dans sa mémoire interne.

Jon Healey: "CES: Beamed from the phone to the TV screen", LA Times (9 janvier 2010) décrit un téléphone mobile propre à diffuser des données vers un équipement distant.

WO 2008/143493 (27 novembre 2008) décrit un système de diffusion multimédia et son procédé.

Toutefois, la diffusion en flux d'un fichier initialement stocké dans une mémoire du serveur web est relativement fastidieuse à mettre en oeuvre par l'utilisateur sur un tel téléphone mobile, fonctionnant en particulier sous un système d'exploitation de type Android. L'utilisateur doit commencer par lancer le navigateur web, afin de télécharger le fichier depuis la mémoire du serveur web vers sa propre mémoire. Cette opération nécessite notamment pour l'utilisateur de sélectionner le fichier à télécharger, et d'indiquer un emplacement de la mémoire interne pour le stockage du fichier téléchargé. L'utilisateur doit alors sélectionner à l'aide d'un contrôleur UPnP, ou respectivement DLNA, le fichier téléchargé pour sa diffusion en flux par le serveur de diffusion.

Le but de l'invention est de proposer un téléphone mobile comprenant un serveur de diffusion en flux et des moyens de téléchargement d'un fichier depuis un serveur web, permettant de faciliter la diffusion en flux d'un fichier initialement stocké dans une mémoire du serveur web.

A cet effet, l'invention a pour objet un téléphone mobile du type précité, caractérisé en ce que le serveur de diffusion en flux comporte des moyens d'activation des moyens de téléchargement, lesdits moyens d'activation étant propres à activer le téléchargement dudit fichier de données.

Suivant d'autres modes de réalisation, le téléphone mobile comprend une ou plusieurs des caractéristiques suivantes, prises isolément ou suivant toutes les combinaisons techniquement possibles :
- le fichier comporte une pluralité de blocs de données, et les moyens de téléchargement sont propres à télécharger, bloc par bloc, le fichier dans la première mémoire tampon, et
   le serveur de diffusion en flux est propre à transmettre à l'équipement client distant au moins un bloc de données depuis la première mémoire tampon, en l'absence du téléchargement de l'ensemble des blocs de données du fichier ;
- le serveur de diffusion en flux comporte des moyens de transmission suivant le protocole réseau prédéterminé et un organe de commande desdits moyens de transmission, l'organe de commande étant propre à envoyer aux moyens de transmission un signal de commande de la transmission à l'équipement client distant de chacun des blocs téléchargés, avant la réception du bloc téléchargé suivant respectif ;
- le téléphone mobile comprend en outre :
   - des moyens de transformation de données d'un premier format vers un deuxième format, le fichier téléchargé depuis le serveur web étant selon le premier format, les moyens de transformation étant connectés en sortie de la première mémoire tampon,
   - une deuxième mémoire tampon connectée en sortie des moyens de transformation et propre à stocker les données transformées dans le deuxième format,
   dans lequel le serveur de diffusion en flux comporte des moyens de commande des moyens de transformation, propres à envoyer un signal de commande de la transformation du fichier ;
- les moyens de transformation sont propres à transformer le fichier bloc par bloc, et le serveur de diffusion en flux est relié à la deuxième mémoire tampon, et est propre à transmettre à l'équipement client distant au moins un bloc transformé depuis la deuxième mémoire tampon, en l'absence de la transformation de l'ensemble des blocs de données du fichier ;
- les moyens de transformation comprennent des moyens de transcodage, le premier et le deuxième format comportant des attributs image, ou audio et/ou vidéo, et lesdits attributs image, ou audio et/ou vidéo du deuxième format étant distincts de ceux du premier format ;
- les moyens de transformation comprennent des moyens de déchiffrement, le premier format correspondant à des données chiffrées ;
- les moyens de transformation comprennent des moyens de chiffrement, le deuxième format correspondant à des données chiffrées ;
- le téléphone mobile comprend des moyens de réception d'un message instantané issu d'un système de distribution sélective de messages, le message instantané contenant l'adresse web du fichier sur le serveur web ; et
- le téléphone mobile comprend des moyens d'abonnement à un fil RSS, le fil RSS correspondant à l'adresse web du fichier sur le serveur web.

L'invention a également pour objet un réseau local de transmission de données du type précité, caractérisé en ce que le téléphone mobile est tel que défini ci-dessus.

L'invention a également pour objet un procédé mis en oeuvre par un téléphone mobile comprenant une mémoire tampon, des moyens de téléchargement de données depuis un serveur web, les moyens de téléchargement étant reliés à la mémoire tampon, un serveur de diffusion en flux de données à destination d'un équipement client distant suivant un protocole réseau prédéterminé, le serveur de diffusion en flux étant propre à être relié à l'équipement client distant via une liaison de données , et à recevoir, de la part de l'équipement client distant, une requête de diffusion de données,
le procédé comprenant :
- l'émission, par le serveur de diffusion en flux, d'un signal d'activation à destination des moyens de téléchargement,
- le téléchargement, par les moyens de téléchargement, d'un fichier de données dans la mémoire tampon, sur réception dudit signal d'activation.

L'invention a également pour objet un produit programme d'ordinateur comportant des instructions qui, lorsqu'elles sont mises en oeuvre par un calculateur intégré à un téléphone mobile, met en oeuvre le procédé tel que défini ci-dessus.

Ces caractéristiques et avantages de l'invention apparaîtront à la lecture de la description qui va suivre, donnée uniquement à titre d'exemple, et faite en référence aux dessins annexés, sur lesquels :
- la figure 1 est une représentation schématique d'un réseau local de transmission de données comportant un téléphone mobile selon l'invention,
- la figure 2 est un organigramme d'un procédé mis en oeuvre par le téléphone mobile de la figure 1,
- la figure 3 est une représentation schématique de l'interface homme-machine d'un dispositif de contrôle du réseau local de la figure 1 lors d'étapes de sélection d'une vidéo à diffuser en flux parmi une liste de vidéos contenues dans un serveur web, d'un serveur de diffusion en flux parmi une liste de serveurs locaux disponibles, et d'un équipement client distant parmi une liste d'équipements client disponibles, et
- la figure 4 représente schématiquement la transformation de différents paquets d'un fichier téléchargé avant leur diffusion par le serveur de diffusion en flux.

L'invention s'applique en particulier à un téléphone mobile fonctionnant sous le système d'exploitation Android® de la société Google. En variante, l'invention s'applique à un téléphone mobile fonctionnant sous n'importe quel système d'exploitation de même type que le système d'exploitation Android®.

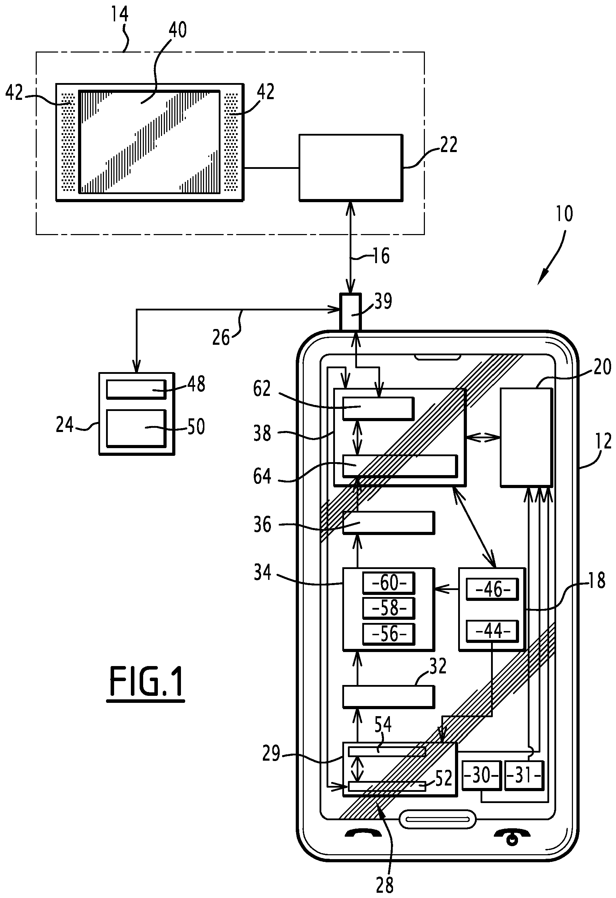

Sur la figure 1, un réseau local 10 de transmission de données comprend un téléphone mobile 12 et un équipement client distant 14 relié au téléphone mobile via une première liaison radioélectrique 16. Le téléphone mobile 12 et l'équipement client distant 14 sont propres à communiquer suivant un protocole réseau prédéterminé.

Le protocole réseau prédéterminé est, par exemple, conforme à la norme ISO/IEC 29341, et est également appelé protocole UPnP (de l'anglais Universal Plug and Play

En complément, le protocole réseau prédéterminé est également conforme au standard d'interopérabilité DLNA (de l'anglais Digital Living Network Alliance), spécifié par le document intitulé « The DLNA Networked Device Interoperability Guidelines » d'août 2009.

Conformément à la norme UPnP ou au standard DLNA, le réseau local de transmission 10 comporte un serveur de diffusion en flux 18, également appelé serveur de média (de l'anglais Media Server), un dispositif de contrôle à distance 20 (de l'anglais Remote Control), et un dispositif client 22, également appelé moteur de rendu (de l'anglais Renderer).

Lorsque le protocole réseau prédéterminé est le protocole UPnP, le serveur de diffusion en flux 18, le dispositif de contrôle 20 et le moteur de rendu 22 sont respectivement appelés serveur UPnP, contrôleur UPnP et client UPnP.

Lorsque le protocole réseau prédéterminé est en outre conforme au standard DLNA, le serveur de diffusion en flux 18, le dispositif de contrôle 20 et le dispositif client 22 sont respectivement appelés serveur DLNA, contrôleur DLNA et client DLNA.

Dans l'exemple de réalisation de la figure 1, le téléphone mobile 12, représenté sous forme de modules fonctionnels, comporte le serveur de diffusion en flux 18 et le dispositif de contrôle 20. L'équipement client distant 14 comporte le dispositif client 22.

En variante, le téléphone mobile comporte le serveur de diffusion en flux, mais ne comporte pas le dispositif de contrôle, un appareil électronique indépendant comprenant ledit dispositif de contrôle. L'équipement client distant comporte le dispositif client.

En variante, le téléphone mobile comporte le serveur de diffusion en flux, mais ne comporte pas le dispositif de contrôle, l'équipement client distant comprenant à la fois le dispositif de contrôle et le dispositif client.

Le téléphone mobile 12 est également relié à un serveur web 24 par l'intermédiaire d'une deuxième liaison radioélectrique 26.

Le téléphone mobile 12 comprend un écran d'affichage 28, associé à des moyens, non représentés, d'affichage d'une image à l'écran, et un navigateur web 29.

Selon un mode de réalisation représenté sur la figure 1, le téléphone mobile 12 comprend également des moyens 30 de réception d'un message instantané issu d'un système de distribution sélective de messages, non représenté, et des moyens 31 d'abonnement à un fil RSS. Le système de distribution sélective de messages est également connu sous le nom de système PUSH, le message instantané étant connu sous le nom de message PUSH. Le message instantané est propre à contenir l'adresse du fichier sur le serveur web 24, également connue sous le nom d'adresse URL (de l'anglais Uniform Ressource Locator). Autrement dit, le message PUSH contient l'URL du fichier. Le fil RSS correspond à l'adresse web du serveur web 24 propre à transmettre des flux RSS. Plus précisément, le fil RSS contient l'adresse où l'URL du fichier doit être analysée.

Le téléphone mobile 12 comporte une première mémoire tampon 32 connectée en sortie du navigateur web 29, des moyens 34 de transformation d'un fichier stocké dans la première mémoire tampon d'un premier format vers un deuxième format, les moyens de transformation 34 étant connectés en sortie de la première mémoire tampon, et une deuxième mémoire tampon 36 connectée en sortie des moyens de transformation.

Le téléphone mobile 12 comporte également un émetteur-récepteur radioélectrique 38 et une antenne radioélectrique 39.

Le téléphone mobile 12 comporte une unité de traitement d'informations formée, par exemple, d'un processeur de données associé à une mémoire, non représentés. L'unité de traitement est également appelée calculateur. La mémoire comporte les première et deuxième mémoires tampon 32, 36 et est apte à stocker différents logiciels. Le serveur de diffusion en flux 18, le dispositif de contrôle 20, les moyens de téléchargement 28, et les moyens de transformation 34 comportent respectivement un logiciel serveur de diffusion en flux, un logiciel de contrôle, un logiciel de navigation web et de téléchargement de données depuis le serveur web, et un logiciel de transformation du fichier du premier format vers le deuxième format.

L'équipement client distant 14 comporte le dispositif client 22, ainsi qu'un écran 40 d'affichage de données vidéo issues du dispositif client et des haut-parleurs 42 de reproduction de données audio issues du dispositif client.

La liaison radioélectrique 16 est conforme à la norme IEEE 802.11, également appelée norme Wi-Fi™, ou encore à la norme IEEE 802.15, également appelée norme Bluetooth®.

Le serveur de diffusion en flux 18 est relié au dispositif client 22 de l'équipement client distant via l'émetteur-récepteur 38 et la liaison radioélectrique 16. Le serveur de diffusion en flux 18, le dispositif de contrôle 20 et le dispositif client 22 sont propres à communiquer par un protocole de transfert hypertexte, tel que le protocole HTTP (de l'anglais HyperText Transfer Protocol).

Le serveur de diffusion en flux 18 est propre à recevoir, de la part du dispositif client 22 de l'équipement client, une requête de diffusion de données, et à transmettre en réponse des données à destination dudit dispositif client 22 suivant le protocole réseau prédéterminé.

Le serveur de diffusion en flux 18 comporte selon l'invention des moyens 44 d'activation du navigateur web 29 pour le téléchargement d'un fichier. Le serveur de diffusion en flux 18 est propre à activer le téléchargement du fichier depuis le serveur web 24, puis à transmettre le fichier téléchargé à l'équipement client distant 14 par l'intermédiaire de l'émetteur-récepteur 38. L'adresse du fichier sur le serveur web 24, c'est-à-dire l'URL du fichier, est obtenue par l'utilisateur lors d'une navigation sur Internet à l'aide du navigateur 29. En variante, l'URL du fichier est contenue dans le message instantané propre à être reçu par les moyens de réception 30. En variante, l'adresse où l'URL du fichier doit être analysée est contenue dans le fil RSS auquel les moyens d'abonnement 31 sont propres à s'abonner.

Le serveur de diffusion en flux 18 comporte également des moyens 46 de commande des moyens de transformation, le serveur de diffusion en flux 18 étant propre à transmettre le fichier téléchargé, puis transformé, à l'équipement client distant 14 par l'intermédiaire de l'émetteur-récepteur 38.

Le serveur web 24 comporte une unité de traitement d'informations formée, par exemple, d'un processeur de données 48 associé à une mémoire 50. La mémoire est apte à stocker un logiciel de communication avec les moyens de téléchargement 29 du téléphone mobile.

Le navigateur web 29 est connecté à l'émetteur-récepteur 38, et comporte des moyens 52 de téléchargement d'un fichier depuis n'importe quel serveur web, associé à une mémoire tampon de téléchargement 54. La mémoire tampon de téléchargement 54 est connectée en entrée de la première mémoire tampon 32. Les moyens de téléchargement 52 sont propres à télécharger, bloc par bloc, le fichier de données dans la première mémoire tampon 32, le fichier comportant une pluralité de blocs de données.

En variante, les moyens de téléchargement 52 sont indépendants du navigateur web 29. Les moyens de téléchargement 52 comportent, par exemple, un client HTTP. Les moyens d'activation 44 sont alors propres à activer les moyens de téléchargement 52 pour le téléchargement du fichier.

Les moyens de réception 30, respectivement les moyens d'abonnement 31, sont propres à décoder le message PUSH, respectivement le fil RSS, afin de récupérer l'URL du fichier sur le serveur web 24.

Chaque fichier téléchargé dans la première mémoire tampon 32 par les moyens de téléchargement est selon un premier format, et le dispositif client 22 de l'équipement client distant est compatible d'un second format. Le premier et le deuxième format comportent des attributs image, ou audio et/ou vidéo.

Les moyens de transformation 34 sont propres à transcoder chaque fichier téléchargé du premier format vers le second format, puis à stocker le fichier transformé dans la deuxième mémoire tampon 36. Les moyens de transformation 34 sont propres à transformer le fichier de données, bloc par bloc.

Les moyens de transformation 34 comprennent des moyens de déchiffrement 56, propres à déchiffrer le fichier téléchargé, lorsque le premier format correspond à des données chiffrées.

Les moyens de transformation 34 comprennent des moyens de transcodage 58, propres à transcoder le fichier téléchargé, éventuellement déchiffré, lorsque les attributs image, ou audio et/ou vidéo du deuxième format sont distincts de ceux du premier format.

Les moyens de transformation 34 comprennent des moyens de chiffrement 60, propres à chiffrer le fichier téléchargé, éventuellement déchiffré et/ou transcodé, lorsque le deuxième format correspond à des données chiffrées.

L'émetteur-récepteur radioélectrique 38 comporte des moyens 62 d'émission et de réception de signaux radioélectriques et une mémoire tampon d'émission-réception 64. Les moyens d'émission-réception 62 sont reliés à l'antenne radioélectrique 39, et la mémoire tampon d'émission-réception 64 est connectée entre la deuxième mémoire tampon 36 et les moyens d'émission-réception 62.

Selon l'invention, les moyens d'activation 44 sont propres à activer le téléchargement du fichier de données depuis le serveur web 24, lorsque la requête en diffusion émise par le dispositif client 22 contient une adresse URL (de l'anglais Uniform Ressource Locator) préalablement fournie par le serveur de diffusion 18, correspondant au fichier à télécharger.

Selon un autre aspect de l'invention, le serveur de diffusion en flux 18 est propre à transmettre à l'équipement client distant 14 au moins un bloc de données téléchargé depuis la première mémoire tampon 32, en l'absence du téléchargement de l'ensemble des blocs de données du fichier.

Le serveur de diffusion en flux 18 est, par exemple, propre à transmettre simultanément une pluralité de blocs à l'équipement client distant. Le fichier est, par exemple, émis par morceaux depuis le serveur de diffusion 18 à destination de l'équipement client distant 14, la taille de chaque morceau étant fixée par l'équipement client distant 14. Le nombre de blocs transmis simultanément, noté Nt, est alors déterminé de sorte que la taille totale des Nt blocs soit supérieure ou égale à la taille du morceau. Si la taille totale des Nt blocs est supérieure à la taille du morceau, alors le dernier bloc est tronqué en deux parties, la première partie étant envoyée dans le morceau courant, et la seconde partie étant envoyée dans le morceau suivant.

Le ou chaque bloc de données est transmis depuis la première mémoire tampon 32 lorsque le premier format est identique au deuxième format, le fichier ne nécessitant alors pas d'être transformé avant sa diffusion en flux à l'équipement client distant 14.

Les moyens de commande 46 sont propres à envoyer aux moyens de transformation 34 un signal de commande de la transformation d'un bloc respectif du fichier.

Les moyens de commande 46 sont propres à envoyer les signaux de commande aux moyens de transformation 34, en l'absence du téléchargement de l'ensemble des blocs du fichier depuis le serveur web 24.

Selon un autre aspect de l'invention, le serveur de diffusion en flux 18 est propre à transmettre à l'équipement client distant 14 au moins un bloc téléchargé, puis transformé et stocké dans la deuxième mémoire tampon 36, en l'absence de la transformation de l'ensemble des blocs du fichier.

Le ou chaque bloc de données est transmis depuis la deuxième mémoire tampon 36 lorsque le deuxième format est distinct du premier format, le fichier nécessitant alors d'être transformé, bloc par bloc, avant sa diffusion en flux à l'équipement client distant 14. Dans ce cas, chaque bloc transmis à l'équipement client distant 14 est le bloc téléchargé, puis transformé par les moyens de transformation 34.

Le fonctionnement du réseau local de transmission 10 selon l'invention va être expliqué par la suite à l'aide des figues 2 à 4.

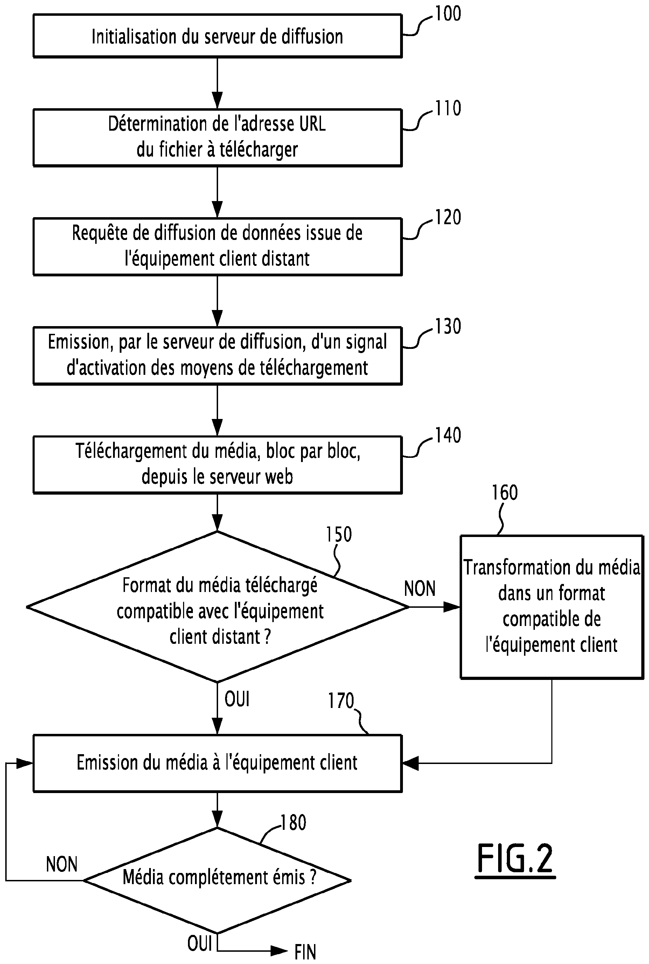

La figure 2 illustre un procédé de diffusion en flux d'un fichier depuis le serveur 18 à destination de l'équipement client distant 14.

Lors de l'étape initiale 100, l'utilisateur commence par autoriser le partage de tout type de fichier depuis le téléphone 12, tel qu'une image, une image, ou une vidéo, en cochant, par exemple, des cases respectives « Partage images », « Partage musiques », « Partage vidéos ». L'utilisateur active ensuite le serveur de diffusion 18 en cochant une case « Activation serveur ».

A l'issue de cette étape initiale, le serveur de diffusion 18 du téléphone est prêt pour émettre, via ses moyens d'activation 44, des signaux d'activation aux moyens de téléchargement 52, dès réception de la part de l'équipement client distant 14 d'une requête en diffusion avec une URL correspondant au serveur web 24.

Le dispositif de contrôle 20 envoie également une requête au dispositif client 22, afin d'obtenir la liste des formats supportés par le dispositif client 22.

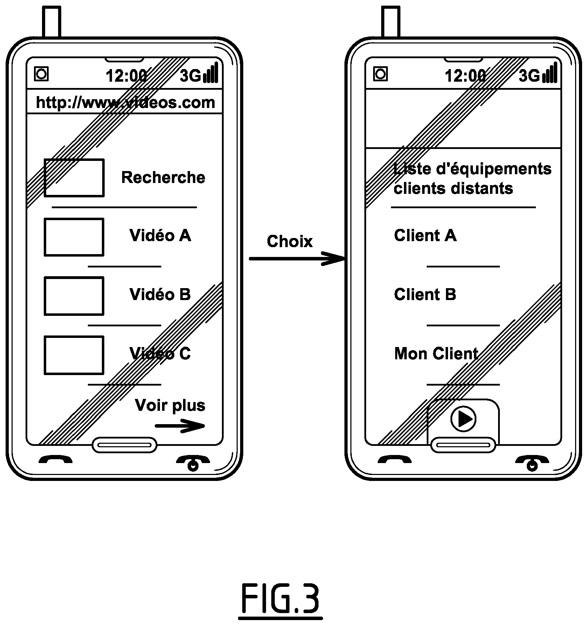

Après l'activation du serveur de diffusion 18, l'adresse web du serveur 24 est déterminée par le dispositif de contrôle 20 lors de l'étape 110. L'utilisateur navigue, par exemple, sur Internet à l'aide du navigateur 29 et sélectionne un fichier qu'il souhaite diffuser en flux à destination de l'équipement client distant 14, comme représenté sur la figure 3. Le navigateur web 29 transmet alors l'URL correspondant au fichier sélectionné au dispositif de contrôle 20.

En variante, l'URL du fichier à télécharger est déterminée lors de la réception par les moyens de réception 30 d'un message instantané, celle-ci étant contenue dans ledit message instantané. Autrement dit, les moyens de réception 30 décodent le message PUSH, afin de récupérer l'URL du fichier sur le serveur web 24, puis envoient l'URL du fichier au dispositif de contrôle 20.

En variante, l'URL du fichier à télécharger est déterminée à l'aide des moyens d'abonnement 31 à un fil RSS sélectionné par l'utilisateur, le fil RSS contenant l'adresse où l'URL du fichier doit être analysée. Autrement dit, les moyens d'abonnement 31 décodent le fil RSS, afin de récupérer l'URL du fichier sur le serveur web 24, puis envoient l'URL du fichier au dispositif de contrôle 20.

Après la détermination de l'URL du fichier sur le serveur 24, l'utilisateur consulte, lors de l'étape 120, via le dispositif de contrôle 20, la liste des équipements client disponibles, et choisit, par exemple, l'équipement client distant 14, appelé « Mon client» dans l'exemple de réalisation de la figure 3. Le serveur de diffusion 18 est, par exemple, imposé par défaut.

Lorsque l'utilisateur a sélectionné l'équipement client distant 14, le dispositif de contrôle 20 envoie une requête au serveur 18 afin de disposer d'une liste de formats de médias susceptibles d'être diffusés en flux.

En réponse, le serveur de diffusion 18 renvoie une liste d'URL, la première URL correspondant à un format par défaut, et les URL suivantes correspondant à des formats de données transformées. En complément de la liste d'URL, le serveur de diffusion 18 renvoie aussi une liste des formats proposés, chaque format étant associé à une URL.

Le dispositif de contrôle 20 compare alors la liste des différents formats proposés par le serveur de diffusion 18 avec la liste des formats supportés par le dispositif client 22, et sélectionne un format commun à ces deux listes. Autrement dit, le format commun sélectionné est le second format décrit précédemment. Le dispositif de contrôle 20 transmet ensuite au dispositif client 22 l'URL issue de la liste transmise par le serveur de diffusion 18 et correspondant au format commun sélectionné.

Le dispositif client 22 transmet au serveur de diffusion 18 une requête contenant l'URL précédemment reçue du dispositif de contrôle 20.

Le fichier correspondant à l'URL reçue étant contenu dans la mémoire du serveur web 24, le serveur de diffusion 18 envoie, lors de l'étape 130, par l'intermédiaire des moyens d'activation 44, un signal d'activation des moyens de téléchargement 52 pour le téléchargement du fichier depuis le serveur web 24.

Les moyens de téléchargement 52 téléchargent alors, lors de l'étape 140, bloc par bloc, le fichier dans la première mémoire tampon 32. Après leur activation par le serveur de diffusion 18, les moyens de téléchargement 52 effectuent le téléchargement indépendamment du serveur de diffusion 18 et des moyens de transformation 34, et stockent au fur et à mesure chaque bloc téléchargé dans la première mémoire tampon 32.

A l'issue de l'activation du téléchargement (étape 130), le serveur de diffusion 18 détermine, lors de l'étape 150, si le format du fichier en cours de téléchargement est compatible avec les formats supportés par l'équipement client distant 14. Autrement dit, le serveur de diffusion 18 détermine si le second format est identique au premier format en interprétant l'URL reçue.

Lorsque le format du fichier en cours de téléchargement n'est pas compatible avec les formats supportés par l'équipement client distant 14, c'est-à-dire lorsque le second format est distinct du premier format, les moyens de commande 46 envoient, lors de l'étape 160, des signaux de commande aux moyens de transformation 34, et les moyens de transformation 34 transforment alors, bloc par bloc, le fichier du premier format vers le second format, puis enregistrent le paquet transformé dans la deuxième mémoire tampon 36. Les moyens de commande 46 envoient les signaux de commande aux moyens de transformation 34 en l'absence du téléchargement de l'ensemble des blocs du fichier.

Lorsque le premier format correspond à des données chiffrées, la transformation d'un bloc respectif du fichier comporte le déchiffrement dudit bloc respectif par les moyens de déchiffrement 56.

Lorsque les attributs image, ou audio et/ou vidéo du deuxième format sont distincts de ceux du premier format, la transformation d'un bloc respectif du fichier comporte le transcodage audio et/ou vidéo dudit bloc respectif par les moyens de transcodage 58. Ledit bloc respectif a été éventuellement déchiffré au préalable par les moyens de déchiffrement 56.

Lorsque le deuxième format correspond à des données chiffrées, la transformation d'un bloc respectif du fichier comporte le chiffrement dudit bloc respectif par les moyens de chiffrement 60. Ledit bloc respectif a été éventuellement déchiffré au préalable par les moyens de déchiffrement 56 e/ou transcodé au préalable par les moyens de transcodage 58.

A l'issue de la transformation du bloc (étape 160), ou directement après l'étape 150 lorsqu'aucune transformation n'est nécessaire, le serveur de diffusion 18 détermine, lors de l'étape 170, si le nombre de blocs téléchargés, et éventuellement transformés, est suffisant pour l'émission du fichier à destination de l'équipement client distant 14. Autrement dit, le serveur de diffusion détermine si le nombre de blocs téléchargés, et éventuellement transformés, est supérieur au nombre Nt de blocs correspondant à la taille du morceau à émettre au dispositif client 22.

Si le nombre de blocs téléchargés, et éventuellement transformés, est supérieur à Nt, alors le serveur de diffusion 18 commande l'émetteur-récepteur 38 pour l'émission du fichier à destination de l'équipement client distant 14. Les blocs téléchargés, et éventuellement transformés, sont alors transférés depuis la deuxième mémoire tampon 36 vers la mémoire tampon d'émission-réception 64, en vue de leur émission de manière autonome par les moyens d'émission 62 de l'émetteur-récepteur.

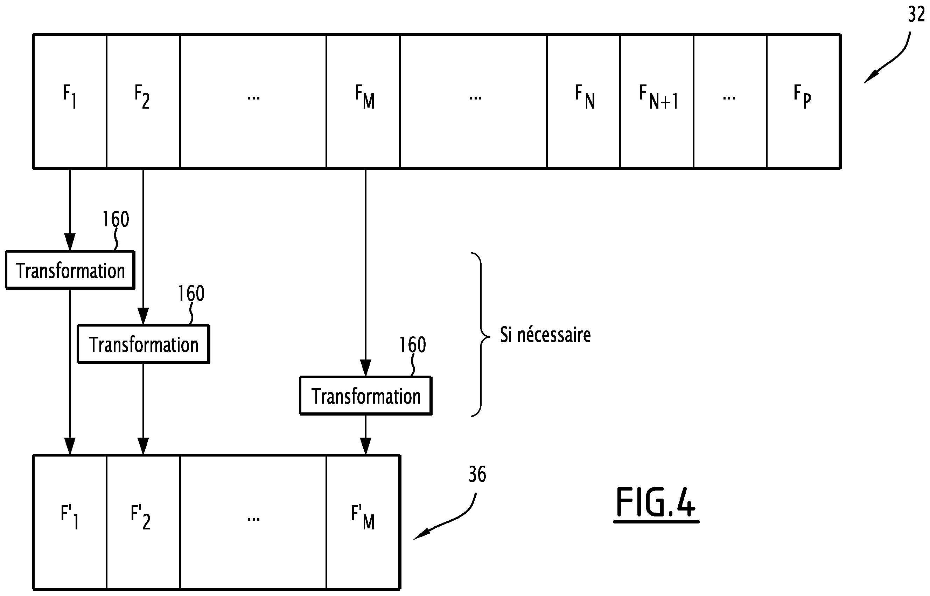

Sinon, le serveur de diffusion 18 attend le téléchargement d'un nombre suffisant de blocs ou réitère l'étape de transformation 160 autant de fois que nécessaire, comme représenté sur la figure 4. Dans l'exemple de réalisation de la figure 4, l'étape de transformation 160 a été effectuée successivement M fois. La figure 4 représente également le stockage dans la première mémoire tampon 32 des paquets F₁ à F_{P} du fichier avant transformation, ainsi que le stockage dans la deuxième mémoire tampon 36 des M blocs transformés F'₁ à F'_{M} prêts à être diffusés en flux à l'équipement client distant 14.

Après l'émission des paquets téléchargés, et éventuellement transformés, du fichier, le serveur de diffusion 18 vérifie enfin lors de l'étape 180 que l'ensemble des blocs du fichier a été émis, et retourne dans le cas contraire à l'étape d'émission 170.

Le serveur de diffusion en flux du téléphone mobile 12 selon l'invention permet ainsi de diffuser en flux un fichier initialement stocké dans la mémoire 50 du serveur web, sans avoir au préalable téléchargé le fichier dans la mémoire du téléphone mobile 12. En effet, le serveur de diffusion comporte des moyens 44 d'activation des moyens de téléchargement 52, et le téléchargement du fichier est alors effectué de manière transparente pour l'utilisateur.

En outre, le serveur de diffusion en flux est propre à transmettre le fichier, bloc par bloc, via l'émetteur-récepteur 38 à destination de l'équipement client 14, en l'absence du téléchargement de l'ensemble des blocs du fichier. Ceci permet de réduire le temps d'attente pour l'utilisateur, en transmettant au plus tôt des blocs téléchargés à l'équipement client 14, sans attendre que la totalité du fichier ait été téléchargée.

Lorsque le second format est distinct du premier format, les moyens de commande 46 sont propres à envoyer les signaux de commande aux moyens de transformation 34 sans attendre que la totalité du fichier ait été téléchargée. Ceci permet également de réduire le temps d'attente pour l'utilisateur.

On conçoit ainsi que l'invention permet de proposer un téléphone mobile comprenant un serveur de diffusion en flux et des moyens de téléchargement d'un fichier depuis un serveur web, permettant de faciliter la diffusion en flux d'un fichier initialement stocké dans une mémoire du serveur web.

## Revendications

1. Téléphone mobile (12), du type comprenant :
- une première mémoire tampon (32),
- des moyens (52) de téléchargement d'un fichier de données depuis un serveur web (24) dans la première mémoire tampon (32), le fichier étant accessible à une adresse web sur le serveur web (24), les moyens de téléchargement (52) étant reliés à la première mémoire tampon (32),
- un serveur (18) de diffusion en flux de données à destination d'un équipement client distant (14) suivant un protocole réseau prédéterminé, le serveur de diffusion en flux (18) étant relié à la première mémoire tampon (32), le serveur de diffusion en flux (18) étant propre à être relié à l'équipement client distant (14) via une liaison de données (16) et à recevoir, de la part de l'équipement client distant (14), une requête de diffusion de données,
**caractérisé en ce que** le serveur de diffusion en flux (18) comporte des moyens (44) d'activation des moyens de téléchargement (52), lesdits moyens d'activation (44) étant propres à activer le téléchargement dudit fichier de données.

2. Téléphone mobile (12) selon la revendication 1, dans lequel le fichier comporte une pluralité de blocs de données, et les moyens de téléchargement (52) sont propres à télécharger, bloc par bloc, le fichier dans la première mémoire tampon (32), et
dans lequel le serveur de diffusion en flux (18) est propre à transmettre à l'équipement client distant (14) au moins un bloc de données depuis la première mémoire tampon (32), en l'absence du téléchargement de l'ensemble des blocs de données du fichier.

3. Téléphone mobile (12) selon la revendication 2, dans lequel le serveur de diffusion en flux (18) comporte des moyens (38) de transmission suivant le protocole réseau prédéterminé et un organe de commande desdits moyens de transmission (38), l'organe de commande étant propre à envoyer aux moyens de transmission (38) un signal de commande de la transmission à l'équipement client distant de chacun des blocs téléchargés, avant la réception du bloc téléchargé suivant respectif.

4. Téléphone mobile (12) selon l'une quelconque des revendications précédentes, comprenant en outre :
- des moyens (34) de transformation de données d'un premier format vers un deuxième format, le fichier téléchargé depuis le serveur web (24) étant selon le premier format, les moyens de transformation (34) étant connectés en sortie de la première mémoire tampon (32),
- une deuxième mémoire tampon (36) connectée en sortie des moyens de transformation (34) et propre à stocker les données transformées dans le deuxième format,
dans lequel le serveur de diffusion en flux (18) comporte des moyens (46) de commande des moyens de transformation (34), propres à envoyer un signal de commande de la transformation du fichier.

5. Téléphone mobile (12) selon la revendication 4, dans lequel les moyens de transformation (34) sont propres à transformer le fichier bloc par bloc, et dans lequel le serveur de diffusion en flux (18) est relié à la deuxième mémoire tampon (36), et est propre à transmettre à l'équipement client distant (14) au moins un bloc transformé depuis la deuxième mémoire tampon (36), en l'absence de la transformation de l'ensemble des blocs de données du fichier.

6. Téléphone mobile (12) selon la revendication 4 ou 5, dans lequel les moyens de transformation (34) comprennent des moyens de transcodage (58), le premier et le deuxième format comportant des attributs image, ou audio et/ou vidéo, et lesdits attributs image, ou audio et/ou vidéo du deuxième format étant distincts de ceux du premier format.

7. Téléphone mobile (12) selon l'une quelconque des revendications 4 à 6, dans lequel les moyens de transformation (34) comprennent des moyens de déchiffrement (56), le premier format correspondant à des données chiffrées.

8. Téléphone mobile (12) selon l'une quelconque des revendications 4 à 7, dans lequel les moyens de transformation (34) comprennent des moyens de chiffrement (60), le deuxième format correspondant à des données chiffrées.

9. Téléphone mobile (12) selon l'une quelconque des revendications précédentes, comprenant des moyens (30) de réception d'un message instantané issu d'un système de distribution sélective de messages, le message instantané contenant l'adresse web du fichier sur le serveur web (24).

10. Téléphone mobile (12) selon l'une quelconque des revendications précédentes, comprenant des moyens (31) d'abonnement à un fil RSS, le fil RSS correspondant à l'adresse web du fichier sur le serveur web (24).

11. Réseau local (10) de transmission de données comportant un téléphone mobile (12) et un équipement client distant (14) relié au téléphone mobile (12) via une liaison de données (16), le téléphone mobile (12) et l'équipement client distant (14) étant propres à communiquer suivant un protocole réseau prédéterminé, **caractérisé en ce que** le téléphone mobile (12) est conforme à l'une quelconque des revendications précédentes.

12. Procédé mis en oeuvre par un téléphone mobile (12) comprenant une mémoire tampon (32), des moyens (52) de téléchargement de données depuis un serveur web (24), les moyens de téléchargement (52) étant reliés à la mémoire tampon (32), un serveur (18) de diffusion en flux de données à destination d'un équipement client distant (14) suivant un protocole réseau prédéterminé, le serveur de diffusion en flux (18) étant propre à être relié à l'équipement client distant (14) via une liaison de données (16), et à recevoir, de la part de l'équipement client distant (14), une requête de diffusion de données,
le procédé comprenant :
- l'émission (130), par le serveur de diffusion en flux (18), d'un signal d'activation à destination des moyens de téléchargement (52),
- le téléchargement (140), par les moyens de téléchargement (52), d'un fichier de données dans la mémoire tampon (32), sur réception dudit signal d'activation.

13. Produit programme d'ordinateur comportant des instructions qui, lorsqu'elles sont mises en oeuvre par un calculateur intégré à un téléphone mobile, met en oeuvre le procédé selon la revendication 12.

## Patentansprüche

1. Mobiltelefon (12), umfassend:
- einen ersten Pufferspeicher (32),
- Mittel (52) zum Herunterladen einer Datendatei von einem Webserver (24) in den ersten Pufferspeicher (32), wobei die Datei an einer Webadresse auf dem Webserver (24) zugänglich ist, wobei die Mittel (52) zum Herunterladen mit dem ersten Pufferspeicher (32) verbunden sind,
- einen Übertragungsserver (18) eines Datenflusses in Richtung einer entfernten Kundenausrüstung (14) nach einem vorbestimmten Netzprotokoll, wobei der Flussübertragungsserver (18) mit dem ersten Pufferspeicher (32) verbunden ist, wobei der Flussübertragungsserver (18) geeignet ist, mit der entfernten Kundenausrüstung (14) über eine Datenverbindung (16) verbunden zu sein und von der entfernten Kundenausrüstung (14) eine Datenübertragungsanfrage zu erhalten,
**dadurch gekennzeichnet, dass** der Flussübertragungsserver (18) Mittel (44) zur Aktivierung der Mittel zum Herunterladen (52) umfasst, wobei die Aktivierungsmittel (44) geeignet sind, das Herunterladen der Datendatei zu aktivieren.

2. Mobiltelefon (12) nach Anspruch 1, bei dem die Datei eine Vielzahl von Datenblöcken umfasst, und die Mittel (52) zum Herunterladen geeignet sind, die Datei Block für Block in den ersten Pufferspeicher (32) herunterzuladen, und
bei dem der Flussübertragungsserver (18) geeignet ist, an die entfernte Kundenausrüstung (14) mindestens einen Datenblock vom ersten Pufferspeicher (32) ohne Herunterladen der Gesamtheit der Datenblöcke der Datei zu übertragen.

3. Mobiltelefon (12) nach Anspruch 2, bei dem der Flussübertragungsserver (18) Übertragungsmittel (38) nach dem vorbestimmten Netzprotokoll und ein Steuerelement der Übertragungsmittel (38) umfasst, wobei das Steuermittel geeignet ist, an die Übertragungsmittel (38) ein Steuersignal der Übertragung jedes der heruntergeladenen Blöcke an die entfernte Kundenausrüstung vor dem Empfang des jeweiligen folgenden heruntergeladenen Blocks zu senden.

4. Mobiltelefon (12) nach einem der vorhergehenden Ansprüche, ferner umfassend:
- Mittel (34) zur Umformung von Daten von einem ersten Format in ein zweites Format, wobei die von dem Webserver (24) heruntergeladene Datei im ersten Format ist, wobei die Umformungsmittel (34) am Ausgang des ersten Pufferspeichers (32) angeschlossen sind,
- einen zweiten Pufferspeicher (36), der am Ausgang der Umformungsmittel (34) angeschlossen und geeignet ist, die in das zweite Format umgeformten Daten zu speichern,
wobei der Flussübertragungsserver (18) Steuermittel (46) der Umformungsmittel (34) umfasst, die geeignet sind, ein Steuersignal der Umformung der Datei zu senden.

5. Mobiltelefon (12) nach Anspruch 4, bei dem die Umformungsmittel (34) geeignet sind, die Datei Block für Block umzuformen, und bei dem der Flussübertragungsserver (18) mit dem zweiten Pufferspeicher (36) verbunden und geeignet ist, an die entfernte Kundenausrüstung (14) mindestens einen umgeformten Block vom zweiten Pufferspeicher (36) ohne Umformung der Gesamtheit der Datenblöcke der Datei zu übertragen.

6. Mobiltelefon (12) nach Anspruch 4 oder 5, bei dem die Umformungsmittel (34) Transcodierungsmittel (58) umfassen, wobei das erste und das zweite Format Bild- oder Audio- und/oder Videoattribute umfassen, und wobei sich die Bild- oder Audio- und/oder Videoattribute des zweiten Formats von jenen des ersten Formats unterscheiden.

7. Mobiltelefon (12) nach einem der Ansprüche 4 bis 6, bei dem die Umformungsmittel (34) Entschlüsselungsmittel (56) umfassen, wobei das erste Format verschlüsselten Daten entspricht.

8. Mobiltelefon (12) nach einem der Anspruche 4 bis 7, bei dem die Umformungsmittel (34) Verschlüsselungsmittel (60) umfassen, wobei das zweite Format verschlüsselten Daten entspricht.

9. Mobiltelefon (12) nach einem der vorhergehenden Ansprüche, umfassend Empfangsmittel (30) einer Sofortnachricht, die von einem selektiven Nachrichtenverteilungssystem kommt, wobei die Sofortnachricht die Webadresse der Datei auf dem Webserver (24) enthält.

10. Mobiltelefon (12) nach einem der vorhergehenden Ansprüche, umfassend Abonnementmittel (31) an einen RSS-Feed, wobei der RSS-Feed der Webadresse der Datei auf dem Webserver (24) entspricht.

11. Lokales Datenübertragungsnetz (10), umfassend ein Mobiltelefon (12) und eine entfernte Kundenausrüstung (14), die an das Mobiltelefon (12) über eine Datenverbindung (16) angeschlossen ist, wobei das Mobiltelefon (12) und die entfernte Kundenausrüstung (14) geeignet sind, nach einem vorbestimmten Netzprotokoll zu kommunizieren, **dadurch gekennzeichnet, dass** das Mobiltelefon (12) einem der vorhergehenden Ansprüche entspricht.

12. Verfahren, das von einem Mobiltelefon (12) eingesetzt wird, umfassend einen Pufferspeicher (32), Mittel (52) zum Herunterladen von Daten von einem Webserver (24), wobei die Mittel (52) zum Herunterladen mit dem Pufferspeicher (32) verbunden sind, einen Übertragungsserver (18) eines Datenflusses in Richtung einer entfernten Kundenausrüstung (14) nach einem vorbestimmten Netzprotokoll, wobei der Flussübertragungsserver (18) geeignet ist, mit der entfernten Kundenausrüstung (14) über eine Datenverbindung (16) verbunden zu sein und von der entfernten Kundenausrüstung (14) eine Datenübertragungsanfrage zu erhalten,
wobei das Verfahren umfasst:
- das Senden (130) eines Aktivierungssignals in Richtung der Mittel (52) zum Herunterladen durch den Flussübertragungsserver (18),
- das Herunterladen (140) einer Datendatei in den Pufferspeicher (32) durch die Mittel (52) zum Herunterladen bei Empfang des Aktivierungssignals.

13. Computerprogrammprodukt, umfassend Anweisungen, die, wenn sie von einem in ein Mobiltelefon integrierten Rechner eingesetzt werden, das Verfahren nach Anspruch 12 einsetzen.

## Claims

1. Mobile telephone (12), of the type comprising:
- a first buffer memory (32),
- means (52) for downloading a data file from a Web server (24) into the first buffer memory (32), the file being accessible at a Web address on the Web server (24), the downloading means (52) being linked to the first buffer memory (32),
- a server (18) for streaming data to a remote client appliance (14) according to a predetermined network protocol, the streaming server (18) being linked to the first buffer memory (32), the streaming server (18) being able to be linked to the remote client appliance (14) via a data link (16) and to receive, from the remote client appliance (14), a data broadcasting request,
**characterized in that** the streaming server (18) comprises means (44) for activating the downloading means (52), the said activating means (44) being able to activate the downloading of the said data file.

2. Mobile telephone (12) according to Claim 1, in which the file comprises a plurality of data blocks, and the downloading means (52) are able to download, block by block, the file into the first buffer memory (32), and
in which the streaming server (18) is able to transmit to the remote client appliance (14) at least one data block from the first buffer memory (32), in the absence of the downloading of the whole set of data blocks of the file.

3. Mobile telephone (12) according to Claim 2, in which the streaming server (18) comprises means (38) of transmission according to the predetermined network protocol and a control facility for the said transmission means (38), the control facility being able to dispatch to the transmission means (38) a control signal commanding the transmission to the remote client appliance of each of the downloaded blocks, before the reception of the respective following downloaded block.

4. Mobile telephone (12) according to any one of the preceding claims, furthermore comprising:
- means (34) for transforming data from a first format to a second format, the file downloaded from the Web server (24) being according to the first format, the transformation means (34) being connected at the output of the first buffer memory (32),
- a second buffer memory (36) connected at the output of the transformation means (34) and able to store the data transformed in the second format,
in which the streaming server (18) comprises means (46) of control of the transformation means (34), able to dispatch a control signal commanding the transformation of the file.

5. Mobile telephone (12) according to Claim 4, in which the transformation means (34) are able to transform the file block by block, and in which the streaming server (18) is linked to the second buffer memory (36), and is able to transmit to the remote client appliance (14) at least one transformed block from the second buffer memory (36), in the absence of the transformation of the whole set of data blocks of the file.

6. Mobile telephone (12) according to Claim 4 or 5, in which the transformation means (34) comprise transcoding means (58), the first and the second format comprising image, or audio and/or video attributes, and the said image, or audio and/or video attributes of the second format being distinct from those of the first format.

7. Mobile telephone (12) according to any one of Claims 4 to 6, in which the transformation means (34) comprise decryption means (56), the first format corresponding to encrypted data.

8. Mobile telephone (12) according to any one of Claims 4 to 7, in which the transformation means (34) comprise encryption means (60), the second format corresponding to encrypted data.

9. Mobile telephone (12) according to any one of the preceding claims, comprising means (30) for receiving an instant message arising from a system for selective distribution of messages, the instant message containing the Web address of the file on the Web server (24).

10. Mobile telephone (12) according to any one of the preceding claims, comprising means (31) of subscription to an RSS thread, the RSS thread corresponding to the Web address of the file on the Web server (24).

11. Local network (10) for data transmission comprising a mobile telephone (12) and a remote client appliance (14) linked to the mobile telephone (12) via a data link (16), the mobile telephone (12) and the remote client appliance (14) being able to communicate according to a predetermined network protocol, **characterized in that** the mobile telephone (12) complies with any one of the preceding claims.

12. Method implemented by a mobile telephone (12) comprising a buffer memory (32), means (52) for downloading data from a Web server (24), the downloading means (52) being linked to the buffer memory (32), a server (18) for streaming data to a remote client appliance (14) according to a predetermined network protocol, the streaming server (18) being able to be linked to the remote client appliance (14) via a data link (16), and to receive, from the remote client appliance (14), a data broadcasting request,
the method comprising:
- the emission (130), by the streaming server (18), of an activation signal destined for the downloading means (52),
- the downloading (140), by the downloading means (52), of a data file into the buffer memory (32), on receipt of the said activation signal.

13. Computer program product comprising instructions which, when they are implemented by a chip integrated into a mobile telephone, implements the method according to Claim 12.
